# EUROPEAN PATENT APPLICATION

(11) **EP 2 662 845 A2**
(43) Date of publication of application: **13.11.2013**
(21) Application number: 13167378.2
(22) Date of filing: 10.05.2013
(51) Int. Cl.: G08B 17/06, G08B 25/04

(54) **Alarm system**

(30) Priority: 10.05.2012 GB 201208231
(71) Applicant: Thermocable (Flexible Elements) Limited, Bradford, West Yorkshire BD14 6LU (GB)
(72) Inventor: Robst, Tom, Bradford, West Yorkshire BD13 3LX (GB)
(74) Representative: Alton, Andrew

(57) **Abstract**

An alarm system, method of operation and linear sensor are described. A linear sensor is configured to detect an anomalous environmental condition. A controller is connected to the linear sensor. The controller is configured to determine from the linear sensor if an anomalous environmental condition has occurred and, responsive to determining that the anomalous environmental condition has occurred, transmit a message to a remote recipient device over a communication network indicating that the anomalous environmental condition has occurred.

## Description

The present invention relates to condition responsive systems generally and in particular to alarm systems using linear sensors to detect an environmental condition which might give rise to an alarm condition.

There are a large number of applications in which alarm systems can be used to help detect anomalous situations. For example, an alarm system might be used to help monitor the security of a building, such as a home, office, or factory, using one or more sensors or detectors. If the building being monitored is very large in size then very many sensors or detectors may be needed to reliably monitor the state of the building. The large number of sensors or detectors adds to the complexity and cost of the security system.

Even if sufficient sensors are provided to reliably monitor a large building, if the alarm system is local to the building then any alarm may not be noticed if the building is unoccupied at the time the alarm is raised. Although alarm systems exist which can alert an authority, such as the police or a monitoring service if the alarm is triggered, such systems require further alarm system infrastructure to be provided increasing the complexity of the alarm system and the difficulty of installation. Hence, a private individual may not be motivated to go to the trouble of installing such an alarm system.

It would therefore be beneficial to be able to provide an alarm system which can reliably monitor extensive area and generate a noticeable alarm, which is simple and easy to install.

A first aspect of the invention provides an alarm system. The alarm system can comprise a linear sensor configured to detect an anomalous environmental condition and a controller connected to the linear sensor. The controller can be configured to: determine from the linear sensor if an anomalous environmental condition has occurred; and, responsive to determining that the anomalous environmental condition has occurred, transmit a message to a remote device indicating that the anomalous environmental condition has occurred.

Hence, as the controller automatically transmits a message to a remote communication device when an anomalous condition has been identified, the alarm status can be notified to an interested person or system remote form the alarm system in real-time.

The alarm system can be self-contained or self-sufficient. The controller can itself include all the power and/or communications and/or location determining equipment needed to operate.

The message can be transmitted over a communication network. The communication network can be a wide area network. The communication network can include a cellular telephone network and/or a computer network. The computer network can be a part of the Internet.

The controller can be further configured to wirelessly transmit the message.

The message can be sent as an SMS message or an e-mail message or sent as data using a network communication protocol.

The alarm system can be further configured to determine a geographical location of the controller. An indication of the geographical location of the controller can be included in the message.

The alarm system can be further configured to determine if a fault condition has occurred in the linear sensor. The controller can be further configured to, responsive to determining that the fault condition has occurred, transmit a message indicating that the fault condition has occurred.

The alarm system can be further configured to determine whether an acknowledgement of the transmitted message has been received by the controller and, if not, to resend the message after a delay.

The alarm system can be further configured to determine periodically whether a status of the linear sensor is normal, and responsive to determining that the status is normal, transmit a message indicating that the status is normal.

The controller can further comprise a battery for powering the alarm system. The controller can further comprise a battery level checking circuit. The controller can be further configured to determine the battery level; and responsive to determining that the battery level is below a threshold, transmit a message indicating that the battery level is low.

The controller can be further configured to periodically alternate between a lower power sleep mode and a higher power active mode in which the controller determines if the anomalous environmental condition has occurred.

The controller can be configured to apply an electrical signal to the linear sensor; and determine a state of the linear sensor from a measured value of an electrical signal of the linear sensor.

The state can be from a plurality of different possible states of the linear sensor. The plurality of different possible states can include an alarm state, a normal state and a fault state.

The controller can be further configured to determine the state of the linear sensor using only the two most significant bits of a data item representing the measured value.

The controller can further comprise an analogue to digital converter arranged to convert the measured value into digital data which provides the data item.

The linear sensor can comprise a pair of wires. Each wire can have a distal end and a proximal end, and the pair of wires can be connected at their proximal ends to the controller. The linear sensor can include a resistor having a resistance, wherein the resistor is connected across the distal ends of the wires.

The linear sensor can be from a few meters long to a few kilometres long. For example, the linear sensor can be from 3m to 3000m long. Preferably the linear sensor is at least 1m, 3m, 10m, 30m, 100m, 300m, 1000m or 3000m long.

The controller can further comprise a further resistor having a further resistance, and the resistor and further resistor can be arranged or connected to form a voltage divider. The values of the resistance and further resistance can be such that the voltage across the pair of wires at their proximal end is less than a half, and/or greater than a quarter, of a voltage applied to the voltage divider when the linear sensor is in a normal state.

The controller can further comprise a microprocessor configured to control the controller. The microprocessor can be an 8-bit microprocessor. The microprocessor can be further configured to determine the state of the linear sensor using only the two most significant bits of the data item.

The linear sensor can be configured to detect moisture and/or the anomalous environmental condition can be excessive moisture.

The linear sensor can be configured to detect temperature and/or the anomalous environmental condition can be excessive temperature.

A further aspect of the invention provides an alarmed installation. The alarmed installation can comprise an alarm system according to the preceding aspect of the invention and a site. The linear sensor can be arranged to extend over the site.

The site can include one or more parts of a central heating system or water supply system. The site can be a room or space in a building.

A further aspect of the invention provides a method of operating an alarm system comprising a linear sensor configured to detect an anomalous environmental condition and a controller connected to the linear sensor. The method can comprise determining that an anomalous environmental condition has occurred using the linear sensor. Responsive to determining that the anomalous environmental condition has occurred, a message can be transmitted indicating that the anomalous environmental condition has occurred.

Preferably, the message is transmitted wirelessly.

The message can be transmitted to a web server, a client computer or a wireless communication device. The wireless communication device can be a phone, such as a smart phone.

The message can be sent as an SMS message or an e-mail message.

The method can further comprise determining a geographical location of the controller. An indication of the geographical location of the controller can be included in the message.

The method can further comprise installing the alarm system at a site and arranging the linear sensor to extend over an area of the site.

The site can include one or more parts of a central heating system or water supply system.

A further aspect of the invention provides a system comprising: a linear sensor configured to detect a condition; and a controller. The linear sensor can be connected to the controller. The controller can be configured to apply an electrical signal to the linear sensor. The linear sensor can have a state from a plurality of different possible states of the linear sensor. The controller can be further configured to determine the state of the linear sensor from a measured value of an electrical signal of the linear sensor using only the two most significant bits of a data item representing the measured value.

The plurality of different possible states can include a condition detected state and/or a normal state and/or a fault state.

The controller can further comprise an analogue to digital converter arranged to convert the measured value into digital data which provides the data item.

The linear sensor can comprise a pair of wires, each wire having a distal end and a proximal end. The pair of wires can be connected at their proximal ends to the controller. A resistor having a resistance can be connected across the distal ends.

The controller can further comprise a further resistor having a further resistance. The resistor and further resistor can be arranged or connected to form a voltage divider. The values of the resistance and further resistance can be such that the voltage across the pair of wires at their proximal end is less than a half, and/or greater than a quarter, of a voltage applied to the voltage divider when the linear sensor is in a normal state.

The controller can further comprise an 8-bit microprocessor configured to control the controller. The microprocessor can be further configured to determine the state of the linear sensor using only the two most significant bits of the data item.

A further aspect of the invention provides a method of operating a system comprising a linear sensor configured to detect a condition and a controller connected to the linear sensor. The method can comprise applying an electrical signal to the linear sensor, wherein the linear sensor can have a state from a plurality of different possible states of the linear sensor. The method can further comprise determining the state of the linear sensor from a measured value of an electrical signal of the linear sensor using only the two most significant bits of a data item representing the measured value.

Preferred features of the system aspect can also be preferred counterpart features of the method of operating the system.

Embodiments of the invention will now be described in detail, by way of example only, and with reference to the accompanying drawings, in which:
Figure 1 shows a schematic block diagram of the alarm system according to the invention;
Figure 2 shows a schematic diagram illustrating a part of a heating detecting linear sensor of the alarm system;
Figure 3A shows a schematic diagram illustrating a part of a water detecting linear sensor of the alarm system;
Figure 3B shows a schematic cross sectional diagram through the water detecting linear sensor shown in Figure 3B;
Figure 4 shows a schematic block diagram illustrating a controller of the alarm system;
Figure 5 shows a schematic circuit diagram illustrating a detection circuit of the controller; and
Figure 6 shows a process flow chart illustrating a method of operation of the controller of the alarm system according to the invention.

Similar items in different Figures share common reference signs unless indicated otherwise.

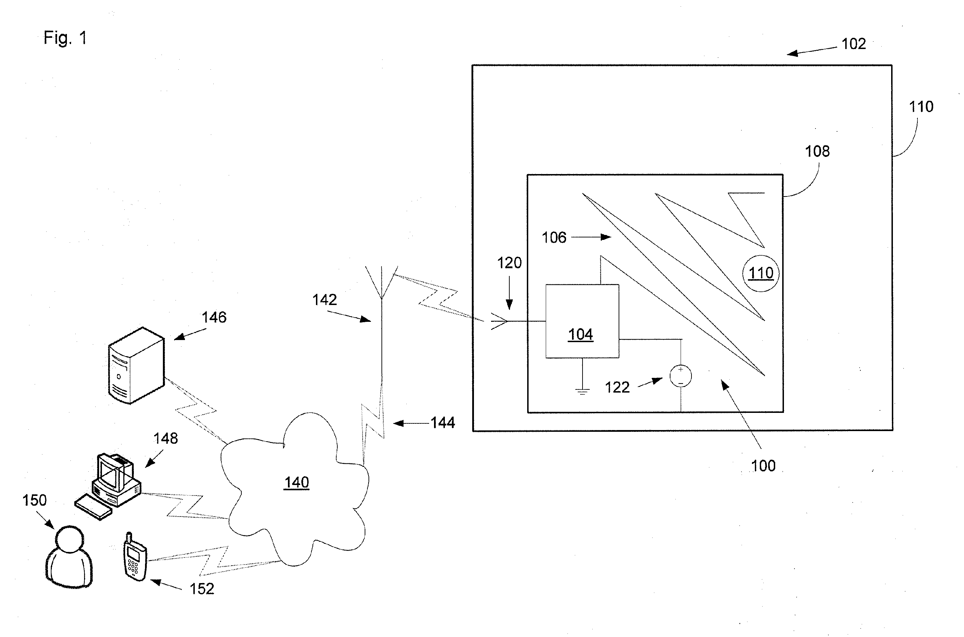

With reference to Figure 1, there is shown a schematic block diagram of an alarm system 100 according to the invention and providing part of a larger alarm installation generally designated 102. The alarm system 100 includes a controller 104 and at least one linear sensor 106 connected to the controller 104 at a proximal end. The first linear sensor can be approximately 3m to 3000m in length. As illustrated in Figure 1, the alarm system is located at a site and the linear sensor is arranged so as to cover an extensive area of the site.

For example, the site may be a part of a building, such as a room 108 of a house 110. For example, in embodiments, as described below, in which the linear sensor is configured to detect excess moisture, the room might include a part of a central heating system and/or domestic water system, such as a radiator, a boiler, a water tank or a mains water inlet. For example, the room 108 might be a loft or other roof space of a house including a cold water tank.

In other embodiments, in which the linear sensor is configured to detect excess heat, the room 108 might be a kitchen including an oven, or a reception room including a fire place.

It will be appreciated that the invention is not limited to these specific rooms nor only to domestic dwellings and the invention can be used in any type of room or space in any type of building, including domestic, commercial and industrial buildings and also, more generally at any type of site at which it is desirable to be able to be able to detect an anomalous environmental condition over an extensive areas or space. In the following, the example of a linear sensor configured to detect excess moisture in a domestic setting will be used merely to give further context to the description of the invention and for the sake of clarity of explanation.

In the example in which the room 108 is a loft or other roof space, a cold water tank 110 of a central heating and/or domestic water supply system is provided. The linear sensor 106 is arranged to cover a large proportion of the area of the floor of the loft, for example, by being arranged in a zig-zag pattern as illustrated in Figure 1. It will be appreciated that the linear sensor can be arranged in other ways so as to cover a large area of the floor of the room. For example, the linear sensor can be arranged in a spiral pattern. Also, the linear sensor can be attached to pipes and/or to the walls and/or ceiling of the room so as to be best located to quickly detect any leaks in the water system. Also, in other embodiments, the linear sensor can be attached to parts of the room and/or water system using suitable fixings such as clips or cable ties.

Controller 104 includes at least a first antenna 120. The controller can, in some embodiments, have an external source of power, such as an external connection to mains power 122. However, in preferred embodiments, no external source of electrical power may be provided and the controller 104 has an onboard battery instead to serve as its sole source of electrical power. Hence, the alarm system can easily be installed and used at sites in which no mains power is available such as roof spaces or in remote areas having no utility supplies.

As further illustrated in Figure 1, controller 104 can communicate via antenna 120 with a communication network 140. As illustrated in Figure 1, the controller 104 can wirelessly communicate with a local antenna 142 of a mobile or cellular telephone network in communication 144 with the network 140. Network 140 will be understood to include parts of the mobile or cellular telephone infrastructure and also one or more computers connected to or in communication with a wide area network, and in particular, the internet. A first server 146 is in communication with network 140, a first client computer 148, associated with user 150, is in communication with network 140. Further, a wireless communication device, such as a smart phone, 152, also associated with user 150, is in communication with network 140.

It will be appreciated, that in other embodiments, if a wired connection to network 140 is available close to the controller 104, then a wired connection instead of a wireless connection may be provided. Alternatively, a wireless access point, rather than a mobile phone antenna, may provide the communication path to the network 140. Irrespective of the specific physical layer connection, the controller 104 can send messages to remote devices connected to network 140 in order to notify the status of the environment being monitored.

Significant damage to buildings can occur owing to flooding, for example burst pipes caused by frozen water, and the damage can be particularly severe when buildings are unoccupied and so nobody is around to detect the flooding. The damage can also be particularly severe, if the flooding occurs in a roof space as the flooding can bring down ceilings and damage multiple floors below the roof space. However, many rooms in which water supply or heating system parts are commonly located, such as roof spaces, cellars, utility rooms, outbuildings, and similar, often do not have easy access to communications or electricity supplies and so the invention is therefore particularly applicable to providing a self-contained or self-sufficient alarm system for use at sites having no or little utility supplies. However, it will be appreciated that the invention is not limited to flood detection only. Rather, the invention can be used to provide an alarm system for any kind of anomalous environmental condition depending only in the nature of the environmental condition that the linear sensor is configured to detect.

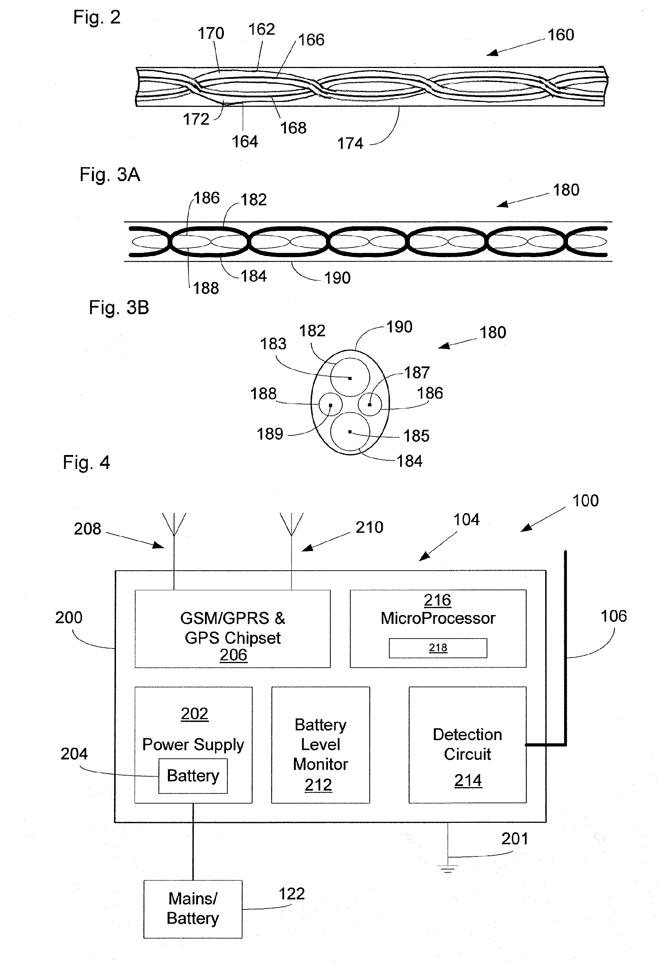

Figure 2 shows a longitudinal sectional view through a part of an embodiment of the linear sensor 106 configured to detect excess temperature which illustrates its physical construction and is designated generally 160. The linear sensor 160 includes a pair of twisted wires 162, 164, each including a tin plated, copper coated, steel core, 166, 168, and having a coating of insulating material 170, 172 formed on the wire cores. The tin plating helps to prevent oxidation and corrosion, the copper coating provides increased conductivity and the steel core provides resilience, or springiness, as the wires are held under tension by twisting. The insulating coatings 170, 172 are made of a non-electrically conductive material, which softens at a particular pre-selected temperature. A suitable material is a low density polyethylene (LDPE) and is available from Total Petrochemicals. Finally, the linear sensor cable 160 has an outer housing 174 of polyvinyl chloride (PVC) to provide environmental protection.

At temperatures below the softening temperature of the coating material 170, 172, the conducting cores 166, 168 are held apart and there is no short circuit between them. However, for temperatures at and above the softening temperature of the coating material, the coating begins to soften and melt and, as the wires are under tension owing to them being twisted, the conducting cores are urged together and exposed parts of the core can contact thereby providing a short circuit between the cores compared to their normal electrical condition. The temperature at which the cores can come into contact can be controlled and varied by the degree of twist, with wires having a greater number of turns being able to detect lower temperatures (as the cores are under greater tension and therefore more strongly urged together) and wires having a lesser number of turns being able to detect higher temperatures (as the cores are under lesser tension and therefore less strongly urged together). For example, by varying the amount of twist in the wires activation temperatures of approximately 68, 78, 88 and 105 °C can be provided.

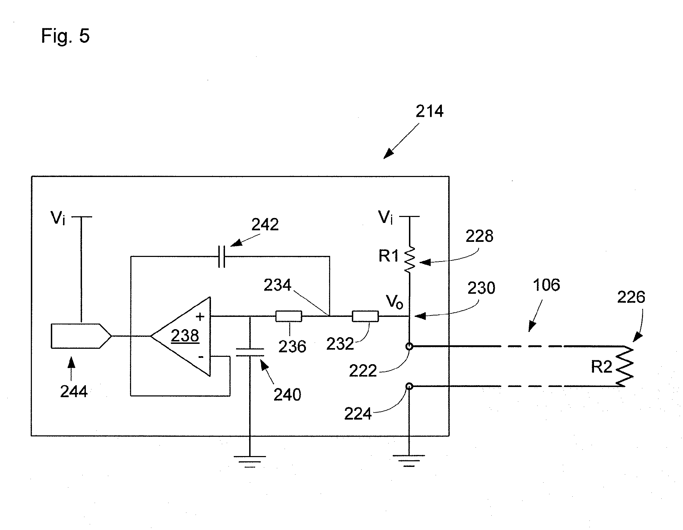

The distal ends of the wires are connected by a resistor of known value, e.g. approximately 5.6 kohms, and as illustrated in Figure 5, and described in greater detail below.

Figures 3A and 3B respectively show a longitudinal sectional view and a transverse sectional view through a part of a further embodiment of the linear sensor 106 configured to detect excess moisture which illustrates its physical construction and is designated generally 180. The water detecting linear sensor cable 180 includes two twisted pairs of wires twisted together within an outer water permeable housing 190. A first twisted pair of wires comprises first wire 182 and second wire 184, each having a conducting core 183, 185 of copper having a diameter of approximately 0.5m and a coating of electrically insulating material such as PVC. The first twisted pair 182, 184 provide additional strength to the linear sensor cable. The second pair of wires comprises first wire 186 and second wire 188, each having a conducting core 187, 189 of copper or tin plated copper, to reduce oxidation and having an extruded coating of a partially electrically conducting material. A suitable material is a doped low-mid density polyethylene as available from TBA Electro Conductive Products Ltd of Rochdale, UK. The diameter of the wires 182, 184 of the first pair of wires is greater than the diameter of the wires 186, 188 of the second pair of wires. The first and second pair of wires are twisted together with the first pair of wires acting as an insulating spacer to keep the second pair of wires apart, as best illustrated in Figure 3B. The outer housing 190 is in the form of a polypropylene braid having a plurality of apertures therein allowing the egress of any environmental moisture.

A distal end of each conducting core 187, 189 of the second pair of wires, referred to as the detection wires, are attached to and connected by a first resistor having a first pre-selected resistance, as described above for the heat sensitive linear detector 160, and as illustrated in Figure 5 below. In the absence of excessive moisture, the resistance of the second pair of wires will be substantially the resistance of the first resistor connected across their distal ends (assuming that the resistance of the copper cores 187,189 is low) and as the second pair of wires are held apart along their length by the first pair of spacer wires 182, 184. However, in the presence of excess moisture, water can pass through the permeably braid housing 190 and into the structure of the pairs of wires and will eventually provide an electrically conductive path between conductive cores 187, 189 of the second pair of detector wires giving rise to a short circuit in the linear sensor. The short circuit causes the resistance of the linear detector to fall close to zero and be much less than the resistance of the resistor connected across the distal ends of the detector wires. Hence, similarly to the heat sensitive linear sensor, an alarm state of the linear sensor can be determined when a short circuit occurs between the pair of detector wires.

It will be appreciated that other linear sensors can also be used in the invention to detect other types of anomalous environmental conditions. All that is required is that a significant drop in resistance occurs when the anomalous environmental condition to be detected occurs. The drop in resistance of the pair of wires may be owing to a short circuit between them, but is not limited to short circuits. In other embodiments, the linear sensor can be a pressure sensor and can include a pair of conducting wires normally held apart by a deformable structure such that when a pressure is applied to the linear sensor, the pair of wires are brought into contact creating a short circuit. Such a linear sensor can be used to detect the presence of intruders, for example a burglar, in the site being monitored. For example, the linear sensor can be arranged on the floor of a room, for example a hall way and hidden under a rug or carpet, such that when an intruder steps on the rug or carpet, an alarm state is created.

It will be appreciated that other types of anomalous environmental conditions can be detected using other types of suitably configured linear sensors in which a short circuit is created between a pair of wires in response to the anomalous environmental condition.

Figure 4 shows a schematic block diagram of the security system 100 and in particular the controller 104 in greater detail. Controller 104 includes a housing 200 enclosing various electrical circuits, parts, modules and components, as illustrated. Although not shown in Figure 4, controller 104 includes various connections, such as power and signal buses, by which various power, control and data signals can be supplied to and transmitted between the various parts of the controller. The controller includes a ground connection 201.

Controller 104 includes a power supply module 202. Power supply module 202 supplies various power signals to the other parts of the controller and includes battery charger circuitry to charge on board battery 204, which may be in the form of a lithium ion rechargeable battery. If the security system is used in an environment in which mains power is available, then a supply of mains power 122 may be connected to the power supply module 202. Additionally, or alternatively, as a supply of power, or back up power, an external battery 122 can be provided, such as a lead acid battery. In preferred embodiments, all of the parts of the controller are provided within the single housing 200 so that the controller is self-contained or self-sufficient and hence the alarm system can be easily installed in any environment or location irrespective of the availability of any power or communications facilities.

Controller 104 also includes a combined communicator and locator module 206. Communicator and locator module 206 provides functions to send messages to external recipient devices and also to determine the geographical location of the controller 104. Although illustrated as a single module in Figure 4, two separate communicator and locator modules may be provided. However, the communicator and locator functions can be easily implemented in a combined or separate GSM/GPRS and GPS chipset, such as a Leon G100 and a Neo 6 respectively, as provided by U-Blox AG of Switzerland. The controller can include a first antenna 208 for wireless communication purposes and a second antenna 210 for receiving location related signals, such as GPS signals. It will be appreciated that antennae 208 and 210 may in some circumstances be combined into a single antenna. Also, antennae 208 and 210 may actually be enclosed within housing 200 or may be external to housing 200.

Controller 104 also includes a battery level monitoring circuit 212 which can operate to measure the current power level of the on-board battery and provide a signal indicative of the current power level of the on-board battery 204.

Controller 104 also includes a detection circuit 214 for monitoring the state of the linear sensor in order to help determine whether an anomalous environmental condition has been detected. The detection circuit 214 will be described in greater detail below with reference to Figure 5.

Finally, controller 104 includes a micro-processor 216. Various types of microprocessor can be used. However, an 8-bit microprocessor can be preferred to help reduce cost. As illustrated in Figure 4, microprocessor 216 includes at least one register 218, which will be an 8-bit register when microprocessor 216 is an 8-bit microprocessor.

Figure 5 shows a schematic block diagram of the detection circuit 214 of the controller 104. The detection circuit includes a pair of terminals 222, 224 to which respective proximal ends of the detecting pair of wires of the linear sensor 106 are attached. The respective distal ends of the detecting pair of wires are connected by a second resistor 226 having resistance R2, e.g. of approximately 5.6 kohms. A one of the terminals 224 is connected to ground. The other one of the terminals 222 is connected to a first resistor 228 having resistance R1, e.g. of approximately 6.8 kohms. A known reference voltage, Vi, , e.g. of approximately 5V, is applied to resistor R1 and an output voltage Vo can be read at a junction 230. Resistors R1 and R2 are arranged to provide a voltage divider in which the output voltage Vo is given by Vi x R2/(R1 + R2). The values of R1 and R2 are selected such that Vo < Vi12 when the linear sensor does not have a fault and does not include any short circuit. For example, the resistance of R2 can be approximately 80% of the resistance of R1. Hence, assuming that the resistance of the detecting wires is nominal, during a normal operational state of the linear sensor, Vo = Vi x 0.8/(1 + 0.8) ≈ 0.44Vi.

If a fault occurs in the linear sensor, for example one of the detector wires snaps or become detached from the second resistor 226 or one of the terminals 222, 224, then the resistance of the linear sensor becomes effectively infinite and so in the fault state Vo ≈ Vi.

If a short circuit occurs between the detector wires, signalling the occurrence of an anomalous environmental condition, then the resistance of the linear sensor becomes close to zero or ground and hence in the alarm state Vo ≈ 0V or ground potential, or at least << Vi.

The junction 230 at which the voltage Vo across the linear sensor is read is connected by a third resistor 232 to a further junction 234 and then to a fourth resistor 236 connected to the positive input of an operational amplifier 238. A first capacitor 240 is connected between the fourth resistor and the op-amp input to ground and a second capacitor 242 is connected between the further junction 234 and a negative input of the operational amplifier 238 to provide a negative feedback loop. The third and fourth resistors, first and second capacitors and operational amplifier are arranged to provide a 2^{nd} order low pass filter to help remove high frequency noise such as that generated by telephones or radio transmissions. Further, the operational amplifier acts to buffer the value of Vo represented by its analogue output signal. The output of the operational amplifier is connected to a 10-bit analogue to digital converter (ADC) 244 and which is referenced to the known reference voltage Vi. A 10-bit ADC is preferred as it provides better resolution than an 8-bit ADC. Hence, the output of the analog to digital converter will be a 10-bit binary data item ranging from 0000000000 (decimal 0) corresponding to 0V to 1111111111 (decimal 1023) corresponding to Vi. It is assumed that the left most digit if the most significant bit (i.e. corresponds to decimal 512) and hence that the second most significant bit is to the right of the left most digit (and corresponds to decimal 256).

As mentioned above it can be preferred to use an 8-bit microprocessor owing to their greater simplicity and lower cost. However, problems arise for an 8-bit microprocessor in trying to handle a 10 bit data item. For example, two 8-bit registers are needed in order to store and process the 10-bit data item. Also, the microprocessor might need to carry out multiplication or division operations in order to convert the 10 bit data item into an 8-bit data item and that can increase the computational burden for the microprocessor and the complexity of its programming. However, using two 8-bit registers, and with the 10-bit data item 'right justified', then a first of the two 8-bit registers includes only the first and second most significant bits of the 10-bit data word and the other 8-bits fill the second 8-bit register. Hence, the microprocessor can read only the two most significant bits in the first register in order to determine the linear sensor state.

The controller can use only the two most significant bits of the analog to digital converter (ADC) output in order reliably to determine the state of the linear sensor, owing to the choice of the value of R2 relative to R1. Hence, the microprocessor does not need to read all 10-bits of the output but rather reads only the two most significant bits into one of its 8-bit registers. As explained above, in a fault state of the linear sensor, Vo ≈ Vi and so the most significant bit of the ADC output will be set, i.e. 1. In a normal state of the linear sensor, Vo ≈ 0.44Vi, and so the most significant bit will not be set, but the 2^{nd} most significant bit will be set, i.e. 1. In a fault condition, Vo ≈ 0V and so neither the most nor 2^{nd} most significant bits will be set. Therefore, by using only the most and 2^{nd} most significant bits the microprocessor can reliably determine which of three different states the linear sensor is in. As will be appreciated, the value of R2 relative to R1 can be any value in a range that limited the output of the ADC to be between 0100000000 (decimal 256) and 0111111111 (decimal 511) corresponding to just greater than Vi/4 and just less than Vi/2 respectively.

Hence, the state of the linear sensor can be represented by the following truth table:

| Value of Most Significant Bit | Value of 2^{nd} Most Significant Bit | State |
|---|---|---|
| 1 | 1 | Fault |
| 1 | 0 | Fault |
| 0 | 1 | Normal |
| 0 | 0 | Alarm |

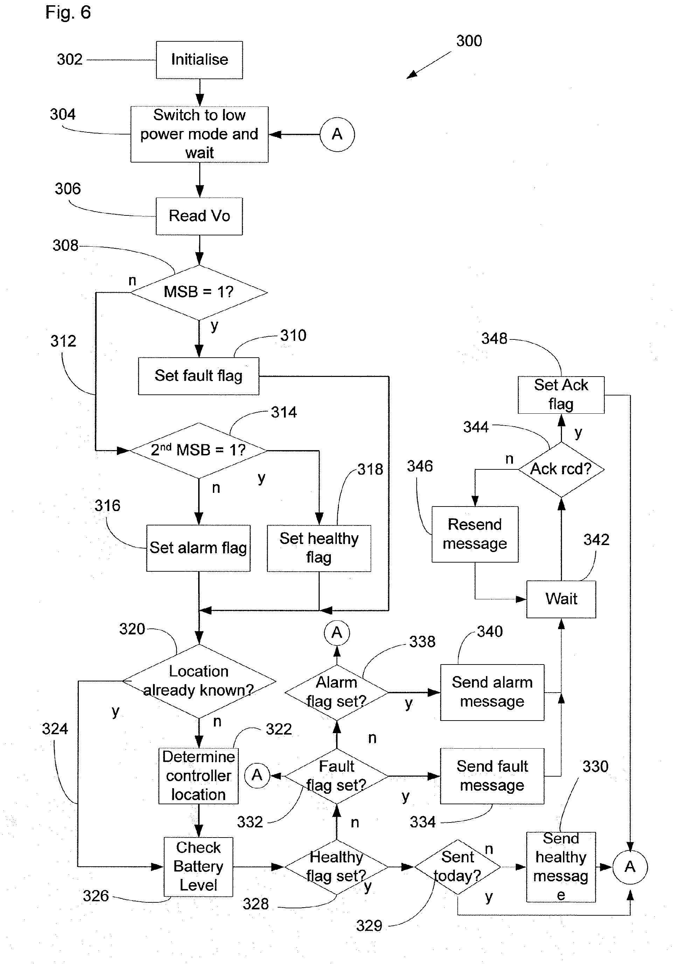

Operation of the alarm system 100 will now be described, with reference to the process flow chart illustrated in Figure 6.

Figure 6 shows a process flow chart illustrating a method 300 of operating the alarm system according to the invention. It will be appreciated that the overall process flow is controlled by microprocessor 216 with various operations carried out by the various components, modules and circuitry present in the controller 104.

With reference to Figure 6, there is shown a process flow chart illustrating a method 300 of operating the controller of the alarm system. The method begins at step 302 with the controller powering on and carrying out various initialisations. Then at step 304, the controller switches to a dormant or passive low power mode in which it does not monitor the status of the linear sensor. After a delay, for example one minute, the controller enters a higher power active state in order to determine the status of the linear sensor.

The microprocessor reads the voltage across the linear sensor, Vo, in order to determine the status of the linear sensor. In more detail, reference voltage Vi is applied to the analogue to digital converter which receives a buffered input of Vo and the output of the analogue to digital converter, being a 10 bit data item, is available to the microprocessor. However, the microprocessor, in the preferred embodiment, is only an 8 bit microprocessor and therefore would require two 8 bit registers to store the 10 bit data item representing the read value of Vo. Instead, the microprocessor stores only the most significant and second most significant bit of the output of the analogue to digital converter.

At step 308, the microprocessor determines whether the most significant bit is 1 or 0. If the most significant bit is set to 1, the processing proceeds to step 310 and a fault flag is set by the microprocessor. Alternatively, if the most significant bit is not set to 1, then processing proceeds along line 312 to step 314. At step 314, the microprocessor determines whether the second most significant bit is set to 1 or not. If it is determined at 314 that the second most significant bit is set to 1, then processing proceeds to step 318 and the microprocessor sets a "healthy" or normal flag indicating that the linear sensor is in a normal mode of operation and that no alarm condition has been detected. Otherwise, if the second most significant bit has not been set to 1 then processing proceeds to step 316 and an alarm flag is set by the microprocessor.

Hence, at this stage in the method, a flag has been set to indicate either a fault, normal or alarm status of the linear sensor. At step 320, the microprocessor determines whether the location of the controller is already determined. For example, after initialisation 302, the microprocessor may instruct the locator module to determine the current geographical position of the controller using the GPS functionality provided therein. The current location may then be stored in a memory for subsequent access, on the basis that movement of the controller since initialisation is unlikely. Hence, if it is determined at step 320 that the geographical location of the controller is already known then processing proceeds along line 324 to step 326. Otherwise, if the location of the controller is not already known, then processing proceeds to step 322 at which the microprocessor instructs the locator module to determine the current geographic position of the controller. The locator module then determines the position, using GPS, and data items representing the determined position of the controller are stored on the controller.

Optionally, at step 326, the microprocessor can check the current battery level of the controller. This need not be carried out every time, but may be carried out on a periodic basis, for example every day. The microprocessor interrogates the battery level monitor circuit and determines the current battery level for the onboard battery of the controller. Data items representing the current battery level are stored locally on the controller as a result of this query.

Processing then proceeds to step 328 at which the microprocessor determines whether the healthy flag has been set. If the healthy flag has been set, then processing proceeds to step 329 and the microprocessor determines whether a 'healthy' message has already been sent within a certain period, for example the last 24 hours or day. If it is determined at step 329 that a healthy message has already been sent 'today' then processing returns to step 304. Otherwise, if no 'healthy' message has already been sent today, then at step 330 and a "healthy" message is sent to a recipient device. This is done because checking the status of the linear sensor requires a small amount of power, whereas sending a message requires significantly more electrical power. Checking the status of the linear sensor should be done frequently, e.g. every minute, so alarm conditions are rapidly detected. Hence, in the described embodiment, the longest period between discovering a fault/alarm status is less than or equal to one minute, but if everything is normal, then only one 'healthy' message is sent per day in order to preserve battery life.

The healthy message includes data items indicating that the controller and linear sensor are operating normally and that no alarm condition has been detected. The healthy message may also include, optionally, data indicating of the current battery level of the controller and/or data items indicating the current geographical location of the controller, in order to help distinguish the controller from multiple different controllers which may be reporting to the same recipient device. The healthy message may also include a data item which is a unique identifier for the controller providing an alternative mechanism for identifying the source of the message. After a healthy message has been sent, then processing proceeds back to step 304 at which the controller switches back to the low power mode and waits for another minute before re-entering the active mode and again checking the status of the linear sensor.

If it is determined at step 328 that the healthy flag is not set, then processing proceeds to step 332 at which it is determined whether the fault flag has been set. If the microprocessor determines the fault flag has been set at 332 and also that an acknowledgement flag has not been set, then a fault message is sent at step 334 to the recipient device. The microprocessor provides data items indicating that the linear sensor is in a fault state to the communicator module and may optionally also include data items indicating the current battery level and/or the current geographical location of the controller and/or a unique identifier for the controller. Then at step 334, the communicator module sends a message to the recipient device over the communication network indicating that the linear sensor has a fault. The initial fault message is sent immediately that the fault flag has been set. Processing then proceeds to step 342 at which the controller waits for a preset period, for example ten minutes, and then at step 344, the microprocessor determines whether any acknowledgment message has been received by the controller via the communicator module. If at step 344, it is determined that an acknowledgement message has been received, then an acknowledgement flag is set at step 348 and processing returns to step 304. Processing then proceeds as described above, but on this loop, at step 332 it is determined that the Ack flag has also been set indicating that the fault message has been acknowledged and hence processing returns directly to step 304 without sending a fault message.

Alternatively, if it is determined at step 344 that no acknowledgement message has been received, then processing proceeds to step 346 and the microprocessor instructs the communicator to resend the fault message and processing proceeds to step 342 at which the controller waits for another ten minutes to determine whether an acknowledgement is received. Processing loops in this way until an acknowledgement message has been received from the recipient device so that the controller can be sure that the fault message has been safely received and noted.

Returning to step 332, if it is determined that the fault flag has not been set, then at step 338, it is determined whether the alarm flag has been set and also whether an acknowledgment flag has been set for an alarm message . If the alarm flag has not been set, then some error may have occurred in the controller and some other error handling or exception processing can be switched to. Otherwise, if it determined that the alarm flag has been set at step 338 and the corresponding acknowledgement flag has not been set, then an alarm message is sent by the controller at step 340. More specifically, the microprocessor instructs the communicator module to send a message to the remote recipient device including data items indicating that the linear sensor is in an alarm state having detected an anomalous environmental condition. As described above, the alarm message may optionally also include an indication of the current battery level of the controller and / or the current geographical position of the controller and / or a unique identifier for the controller. Other information can also be included in the alarm message, such as a time stamp in case there are delays between the message being transmitted and received.

As described above for the fault message, loop 342, 344 and 346 is entered after step 340 and the controller continues to send the alarm message, at ten minute intervals, until an acknowledgment is received from the recipient device confirming that the alarm message has been received. Then at step 348, the acknowledgement flag is set and processing returns to step 304. On a next loop, at step 338, although the alarm flag is set, processing branches directly to step 304 without sending a further alarm message as the acknowledgement is determined to have been set.

Hence, method 300 keeps looping every minute to check the status of the linear detector and sending messages as appropriate. If at step 318, the healthy flag is set again, for example because water has drained away or because the linear sensor cable has been fixed, then the alarm and fault flags are cleared and the controller will send another 'healthy' message indicating that the status is normal again. In this way, the controller never needs an intervention, such as a power on/off reset, but will continue functioning in all situations.

As described above with reference to Figure 1, the notification sent by the controller 104 can be intended for various different receiver devices. For example, in one embodiment, a notification is only sent if an alarm state has been detected and the message can be sent as an SMS message to a wireless telecommunication device, such as a smart phone 152, associated with a user 150 responsible for the site being monitored by the alarm system. For example, the end user 150, may be an owner, resident or caretaker of the building and the message may be a notification indicating that a fire or a flood has been detected. If the user has only a single property, then the location of the controller may not need to be sent as the user will be aware of the location of their property. However, if they are responsible for multiple different properties, then an indication of the location of the controller can also be included so that the user can identify at which property the fire or flood has occurred. Further, as the user receives the message in approximately real time, the user can instruct the emergency services and/or maintenance personnel to take any necessary action. The user can send a reply SMS message back to the controller so as to stop the alarm system sending repeated alarm notifications

Similarly, the message may be sent as an e-mail to an e-mail client on a client computer 148 associated with the end user 150. The e-mail may be sent to an e-mail server which pushes the e-mail notification to a client e-mail application resident on the end users computer 148. Additionally, or alternatively, the e-mail may be received by an application program running on the end users computer 148 which processes the information received in the e-mail in a variety of ways. Additionally, or alternatively, the e-mail notification may be sent to a web server 146 which hosts a website providing access to information about the alarm status of the site, for example a large building. The web server may include an application with logic to process the received message to provide further detailed information available to an end user via a web browser. Similarly, an application hosted on the end users client machine 148 may also include logic to process the information received by the e-mail notification so as to provide further information to the end user. In other embodiments, raw data may be sent from the controller to an application using any suitable network communication protocol such as UDP.

When notifications are sent indicating a normal status of the alarm system then these can be displayed to an end user at all times. When an alarm state or fault state are detected, then the controller position information included in the notification can be processed so as to display a visual indication on a map of the building, or a plurality of different buildings, including controllers showing the location of the controller to which the linear sensor is attached. Additionally or alternatively, logic may be provided to further process the position of the controller in order to determine some ancillary information which might be useful in responding to the break. For example, logic may determine a nearest road or access point by which emergency services and/or maintenance personnel might access the site at which the alarm or fault has occurred. As will be appreciated, this can speed up the rate of responding to an alarm condition such as a flood or fire and hence help reduce damage to the site. Logic can be provided to automatically send a reply email to acknowledged receipt of the alarm and/or fault notification to prevent repeated transmission by the controller.

As linear sensors are used, covering a large area, a reduced number of sensors can be used while still providing entire coverage of the entity being monitored. For example, a water leak may occur in a relatively small area and a large number of individual sensors may need to be used otherwise in order to increase the reliability with which a leak in that specific area might be detected. Further, even in remote locations in which no utilities are available, the controller, being self contained in some embodiments, can still be used. Further, owing to the inclusion of the GPS module providing positional information, it is possible to easily determine the location of the alarm condition within a practicable distance, rather than having to search the entirety of a large site in order to try and identify the location of the cause of the alarm state. Furthermore, the provision of communication functionalities allows a notification, virtually in real time, of the occurrence of any alarm condition thereby improving the speed with which action can be taken.

As discussed above, the invention is not limited to the specifically described flood and fire applications. Rather, the invention has a wide range of applications to a wide range of environmental conditions and a wide range of sites. These sites may have civilian and non-civilian, military, commercial, industrial and other applications. As well as helping identify active events, such as occurring during theft or vandalism, the system can also be used to identify passive events such as accidental damage and thereby provide a general alarm or condition responsive system.

As further discussed above, the linear sensor may be arranged at the site or on the item to be monitored in a number of ways. Some ancillary mechanical fastening means may be used. The linear sensor may be adhered or otherwise bonded continually, or in different locations, to the entity being monitored. The linear sensor may be formed as a part of the entity being monitored. Generally, the linear sensor is arranged over an extensive area and/or length so as to increase the likelihood of detecting an anomalous environmental condition occurring at the site.

Various modifications and changes to the specific embodiments described will be apparent to a person of ordinary skill in the art. Further, the description of the control in terms of functional modules is merely by way of clarity of explanation. The controller is not necessarily limited to the structures used to describe its functional properties. The functions provided by the controller may be realised in other circuitry, modules, parts and components as will be apparent to a person of ordinary skill in the art from the above teaching.

## Claims

1. An alarm system comprising:
a linear sensor configured to detect an anomalous environmental condition; and
a controller connected to the linear sensor, wherein the controller is configured to:
determine from the linear sensor if an anomalous environmental condition has occurred; and
responsive to determining that the anomalous environmental condition has occurred, transmit a message to a remote recipient device over a communication network indicating that the anomalous environmental condition has occurred.

2. The alarm system as claimed in claim 1, wherein:
the linear sensor is configured to detect temperature and the anomalous environmental condition is excessive temperature; or
the linear sensor is configured to detect moisture and the anomalous environmental condition is excessive moisture.

3. The alarm system as claimed in claim 1 or 2, wherein the controller is further configured to wirelessly transmit the message.

4. The alarm system as claimed in claim 3, wherein the message is sent as an SMS message or an e-mail message or using a network communication protocol.

5. The alarm system as claimed in any of claims 1 to 4, wherein the alarm system is further configured to:
determine a geographical location of the controller; and
include an indication of the geographical location of the controller in the message.

6. The alarm system as claimed in any of claims 1 to 4, wherein the alarm system is further configured to:
determine if a fault condition has occurred in the linear sensor; and
responsive to determining that the fault condition has occurred, transmit a message indicating that the fault condition has occurred.

7. The alarm system as claimed in any of claims 1 to 6, wherein the alarm system is further configured to determine whether an acknowledgement of the transmitted message has been received by the controller and, if not, to resend the message after a delay.

8. The alarm system as claimed in any preceding claim, wherein the alarm system is further configured to:
determine periodically whether a status of the linear sensor is normal; and
responsive to determining that the status is normal, transmit a message indicating that the status is normal.

9. The alarm system as claimed in any preceding claim, wherein the controller further comprises:
a battery for powering the alarm system; and
a battery level checking circuit, and wherein the controller is further configured to:
determine the battery level; and
responsive to determining that the battery level is below a threshold, transmit a message indicating that the battery level is low.

10. The alarm system as claimed in any preceding claim, wherein the controller is further configured to periodically alternate between a lower power sleep mode and a higher power active mode in which the controller determines if the anomalous environmental condition has occurred.

11. The alarm system as claimed in any preceding claim and wherein the controller is configured to:
apply an electrical signal to the linear sensor; and
determine a state of the linear sensor from a measured value of an electrical signal of the linear sensor.

12. The alarm system as claimed in claim 11, wherein the state is from a plurality of different possible states of the linear sensor.

13. The alarm system as claimed in claim 12, wherein the plurality of different possible states include an alarm state, a normal state and a fault state.

14. The alarm system as claimed in any of claims 11 to 13, wherein the controller is further configured to determine the state of the linear sensor using only the two most significant bits of a data item representing the measured value, and wherein the controller further comprises an analogue to digital converter arranged to convert the measured value into digital data which provides the data item.

15. The alarm system as claimed in claim 14, wherein the linear sensor comprises:
a pair of wires, each wire having a distal end and a proximal end, and wherein the pair of wires are connected at their proximal ends to the controller; and
a first resistor having a first resistance, wherein the first resistor is connected across the distal ends.

16. A method of operating an alarm system comprising a linear sensor configured to detect an anomalous environmental condition and a controller connected to the linear sensor, the method comprising:
determining that an anomalous environmental condition has occurred using the linear sensor; and
responsive to determining that the anomalous environmental condition has occurred, transmitting a message to a remote recipient device over a communication network indicating that the anomalous environmental condition has occurred.

17. The method of claim 16, wherein:
the linear sensor is configured to detect temperature and the anomalous environmental condition is excessive temperature; or
the linear sensor is configured to detect moisture and the anomalous environmental condition is excessive moisture.

18. The method of claim 16 or 17, wherein the message is transmitted wirelessly to a web server or a wireless communication device

19. The method of any of claims 16 to 18, and further comprising determining a geographical location of the controller, and wherein an indication of the geographical location of the controller is included in the message.
